Europäisches Patentamt

European Patent Office

Office européen des brevets

(19)

(11) Veröffentlichungsnummer: **0 068 084**
**B1**

(12)

# EUROPÄISCHE PATENTSCHRIFT

(45) Veröffentlichungstag der Patentschrift:
04.12.85

(51) Int. Cl.⁴: **C 04 B 32/00, C 04 B 35/80**

(21) Anmeldenummer: 82102790.1

(22) Anmeldetag: 02.04.82

(54) **Wärmeisolationsmischung.**

(30) Priorität: 01.07.81 DE 3125875

(43) Veröffentlichungstag der Anmeldung:
05.01.83 Patentblatt 83/1

(45) Bekanntmachung des Hinweises auf die Patenterteilung:
04.12.85 Patentblatt 85/49

(84) Benannte Vertragsstaaten:
AT BE CH DE FR GB IT LI LU NL SE

(56) Entgegenhaltungen:
EP - A - 0 023 587
DE - A - 1 592 900
DE - A - 2 754 956
GB - A - 1 230 947
US - A - 3 055 831

(73) Patentinhaber: Degussa Aktiengesellschaft,
Weissfrauenstrasse 9, D-6000 Frankfurt am Main 1 (DE)

(72) Erfinder: Kleinschmit, Peter, Dr., Wildaustrasse 19,
D-6450 Hanau 9 (DE)
Erfinder: Schwarz, Rudolf, Dr., Taunusstrasse 2,
D-8755 Alzenau 2 (DE)
Erfinder: Domesle, Raimer, Dr., Wingertstrasse 202,
D-6457 Maintal 1 (DE)
Erfinder: Schmidt, Sabine, Robert Koch Strasse 15,
D-6454 Bruchköbel (DE)

## Beschreibung

Es sind Wärmeisolationsmischungen, welche feinteilige bis hochdisperse Stoffe als Hauptbestandteil enthalten und die aufgrund ihrer außerordentlich geringen Wärmeleitfähigkeit als ausgezeichnete Wärmeisolationsmittel in erheblichem Umfang angewendet werden, bekannt.

Derartige Wärmeisolationsmischungen können in loser Schüttung bei geeigneter Einmantelung entsprechend DE-B-2 904 412 oder als Stampfmasse eingesetzt werden. Im allgemeinen werden jedoch die Wärmeisolationsmischungen als Granulat entsprechend beispielsweise BE-A-857 490 kompaktiert oder in Platten bzw. Formstücken (Kompaktate) fester Abmessungen gemäß DE-B-2 036 124 verwendet. Für den Fall der Kompaktierung sind diese Wärmeisolationsmittel Bindemittel oder vorzugsweise anorganische Fasern zur Erhöhung der mechanischen Festigkeit in kleinen Mengen beigegeben.

Wärmeisolationsmischungen, die eine außerordentlich gute Isolierwirkung bei hohen Temperaturen besitzen, sind für die auftreffende Wärmestrahlung, deren Wellenlängen überwiegend im Infrarotbereich liegen, undurchlässig. Für diesen Zweck baut man Trübungsmittel in die Wärmeisolationsmischung ein, die die Eigenschaften besitzen, die auftreffende Wärmestrahlung zu reflektieren, absorbieren und zu streuen, wobei es in allen Fällen ein Zusammenspiel aller Eigenschaften darstellt.

Das bisher am häufigsten angewendete Trübungsmittel ist Titandioxid in den Modifikationen Rutil, Anatas oder Brookit. Gemäß US-A-2 808 338 streut Rutil die Wärmestrahlung. Ebenfalls können als Trübungsmittel laut DE-B-2 524 096 Ilmenit sowie Manganoxid, Eisenoxid und Chromoxid, und nach DE-A-2 754 956 Carbide des Siliziums, Bors, Tantals und Wolframs sowie Graphit und Ruß verwendet werden.

Von den aufgezählten Trübungsmitteln können Ruß und Graphit bei höheren Temperaturen nur dann eingesetzt werden, wenn die dauernde Abwesenheit von Sauerstoff gewährleistet ist. Im anderen Fall würden nämlich die Trübungsmitteleigenschaften von Graphit und Ruß durch Zersetzung verloren gehen. Ähnliches gilt auch für einen Teil der aufgezählten Oxide, insbesondere Manganoxid.

Die genannten bekannten Trübungsmittel, hauptsächlich die Metalloxide, sind wegen der gestiegenen Rohstoffpreise sehr kostspielig geworden. Die Carbide des Siliziums, Bors, Tantals oder Wolframs sind durch hohe Herstellungs- und Aufmahlungskosten noch teurer als beispielsweise die bisher verwendeten Trübungsmittel, wie z. B. Titandioxid.

Es besteht somit das Bedürfnis, ein Trübungsmittel zu finden, das dieselben Dämmeigenschaften wie die bekannten Trübungsmittel besitzt, jedoch hohen Temperaturen widerstehen kann und deren Einsatzkosten gering sind.

Gegenstand der Erfindung ist eine Wärmeisolationsmischung, welche dadurch gekennzeichnet ist, daß sie neben hochdispersen Füllstoffen und gegebenenfalls anorganischen Fasern oder/und anorganischen Bindern Quarzpuder mit Teilchengrößenspektren, deren Verteilungsmaxima der Teilchendurchmesser sich von 1 bis 100 Mikrometer ($\mu$m) erstrecken, in Mengen von 20 bis 50 Gew.-%, bezogen auf die gesamte Mischung, enthält.

Besondere Vorteile werden erzielt, wenn der Quarz-Gehalt der Wärmeisolationsmischung 40 Gew.-% beträgt.

Bekanntlich ist Quarz über einen weiten Spektralbereich für infrarotes und ultraviolettes Licht durchlässig. Diese Kenntnis hat offenbar bisher verhindert, daß bisher Quarz als Trübungsmittel eingesetzt worden ist. So werden beispielsweise gemäß EP-A-13 387 nur anorganische Trübungsmittel eingesetzt, die im Infrarotbereich ein Absorptionsmaximum zwischen 1,5 und 10 Mikrometer aufweisen.

Nun hat es sich aber überraschenderweise gezeigt, daß Quarz in den anwendungstechnischen Wellenlängenbereichen durchaus Trübungsmitteleigenschaften aufweist, in denen seither sehr kostspielige Trübungsmittel Eingang gefunden haben. Ebenfalls konnte nicht erwartet werden, daß mit Quarzpuder bestimmter Teilchengrößenspektren wärmedämmende Effekte von hervorragender Qualität erreichbar sind. So kann man beispielsweise durch Zusammenstellung verschiedener Teilchengrößenspektren für dieses System optimale Dämmeigenschaften erreichen. Ein besonderer Vorteil ergibt sich, da es sich bei Quarz um ein besonders preisgünstiges Trübungsmittel handelt. Erfindungsgemäß werden bevorzugt Quarzpuder mit Teilchengrößenspektren, deren Verteilungsmaxima der Teilchendurchmesser sich von 1 bis 15 Mikrometer erstrecken, verwendet.

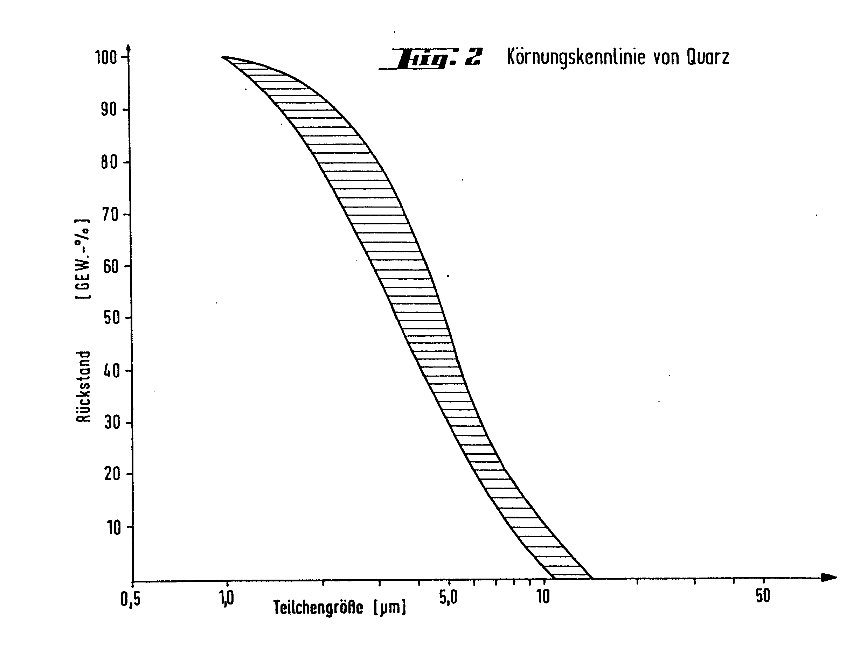

Besonders gute Ergebnisse werden erzielt, wenn das Quarzpuder die Teilchengrößenverteilung gemäß Figur 2 aufweist. Bei den erfindungsgemäßen Wärmeisolationsmischungen können quarzhaltige Mineralien, wie beispielsweise Schiefermehl, deren Hauptbestandteil Quarz ist, eingesetzt werden. Schiefermehl enthält 60 bis 80 Gew.-% Quarz. Derartige Mineralien können auch als alleiniges Trübungsmittel eingesetzt werden.

Als hochdisperse Füllstoffe können bekannte Ruße und/oder pyrogen hergestellte und gefällte Kieselsäuren mit unterschiedlichen physikalisch-chemischen Kenndaten eingesetzt werden. Bevorzugterweise können pyrogen hergestellte Kieselsäure eingesetzt werden.

Als anorganische Faser können Aluminiumsilikate und als anorganische Binder z. B. Wasserglas, Kieselsäuresol verwendet werden. Die erfindungsgemäße Wärmeisolationsmischung kann auf bekannte Weise vermischt und gegebenenfalls zu Kompaktaten, wie Platten, verpreßt werden. Durch die Verwendung von Quarzpuder als Trübungsmittel werden bevorzugt bei hohen Anwendungstemperaturen optimale Dämmeigenschaften erreicht.

Die erfindungsgemäße Wärmeisolationsmischung wird anhand der folgenden Beispiele näher erläutert und beschrieben:

Ein wesentliches Beurteilungskriterium der Qualität der Wärmeisolationsmischung ist in erster Linie ihre Wärmeleitfähigkeit. Für die Beurteilung ist aber auch die thermische Formfestigkeit dieser Kompaktate wesentlich. Denn wenn die Kompaktate durch Schrumpfung ihre geometrische Abmessungen verändern, vermindern sich nicht nur ihre wämedämmenden Eigenschaften selbst, es entstehen vielmehr auch Zwischenräume in der Isolationsschicht, die zu einem Verlust der Isolationswirkung führen. Die Messung der Wärmeleitfähigkeit und thermischen Formfestigkeit der Wärmeisolationsmischungen erfolgt an runden Platten mit den Abmessungen 100 x 20 mm.

Die angegebenen Gew.-%-Werte beziehen sich auf die gesamte Mischung. Die Teilchenspektren werden mittels Coulter Counter ermittelt.

### Beispiel 1

Man stellt in einem schnellaufenden Mischgerät mit 5000 UpM aus 73 Gew.-% einer pyrogenen Kieselsäure, 20 Gew.-% eines feinteiligen Quarzes und 7 Gew.-% einer mineralischen Faser auf Basis Aluminiumsilikat eine homogene Mischung her. Die Mischung wird zu Platten mit Litergewicht 300 g/l verpreßt.

### Beispiel 2

Man stellt wie in Beispiel 1 beschrieben eine Mischung aus 63 Gew.-% einer pyrogenen Kieselsäure, 30 Gew.-% eines feinteiligen Quarzes und 7 Gew.-% einer anorganischen Faser auf Basis Aluminiumsilikat her. Die Mischung wird zu Platten mit Litergewicht 300 g/l verpreßt.

### Beispiel 3

Es wird eine Mischung gemäß Beispiel 1, die aus 43 Gew.-% einer pyrogenen Kieselsäure, 50 Gew.-% eines feinteiligen Quarzes und 7 Gew.-% einer anorganischen Faser auf Basis Aluminiumsilikat besteht, hergestellt. Die Mischung wird zu Platten mit Litergewicht 300 g/l verpreßt.

### Beispiel 4

Es wird eine Mischung gemäß Beispiel 1, aus 53 Gew.-% einer pyrogenen Kieselsäure, 40 Gew.-% eines feinteiligen Quarzes und 7 Gew.-% einer anorganischen Faser auf Basis Aluminiumsilikat hergestellt. Die Mischung wird zu Platten mit Litergewicht 300 g/l verpreßt.

In den genannten Beispielen 1 bis 4 wird eine pyrogene Kieselsäure mit einer Oberfläche nach BET von $300 \pm 30$ m$^2$/g eingesetzt. Der verwendete Quarz besitzt folgendes Teilchengrößenspektrum:

| Teilchendurchmesser | Gew.-% |
|---|---|
| 30 — 40 μm | 0,6 |
| 20 — 30 μm | 6,6 |
| 10 — 20 μm | 21,2 |
| 6 — 10 μm | 21,7 |
| 4 — 6 μm | 23,6 |
| 2 — 4 μm | 13,7 |
| 1 — 2 μm | 12,6 |

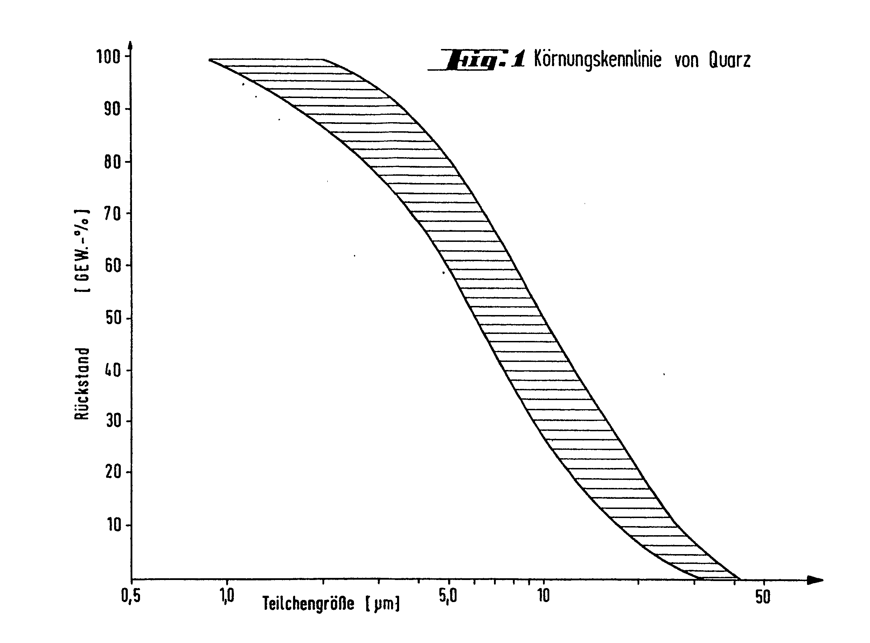

Eine graphische Darstellung dieses Teilchengrößenspektrums zeigt die Figur 1.

3

### Beispiel 5

Man stellt wie in Beispiel 1 beschrieben eine Mischung aus 53 Gew.-% einer pyrogenen Kieselsäure mit einer Oberfläche nach BET von 300 ± 30 m²/g, 40 Gew.-% eines feinteiligen Quarzes mit einem bestimmten Teilchengrößenspektrum und 7 Gew.-% einer anorganischen Faser auf Basis Aluminiumsilikat her. Die Mischung wird zu Platten mit Litergewicht 300 g/l verpreßt. Das Quarzmehl besitzt folgendes Teilchengrößenspektrum:

| Teilchendurchmesser | Gew.% |
| --- | --- |
| 1 bis  4 µm | 53 |
| 4 bis  5 µm | 15 |
| 5 bis  6 µm | 11 |
| 6 bis  7 µm | 6,6 |
| 7 bis  9 µm | 8,8 |
| 9 bis 13 µm | 5 |

Eine graphische Darstellung dieses Teilchengrößenspektrums zeigt die Figur 2.

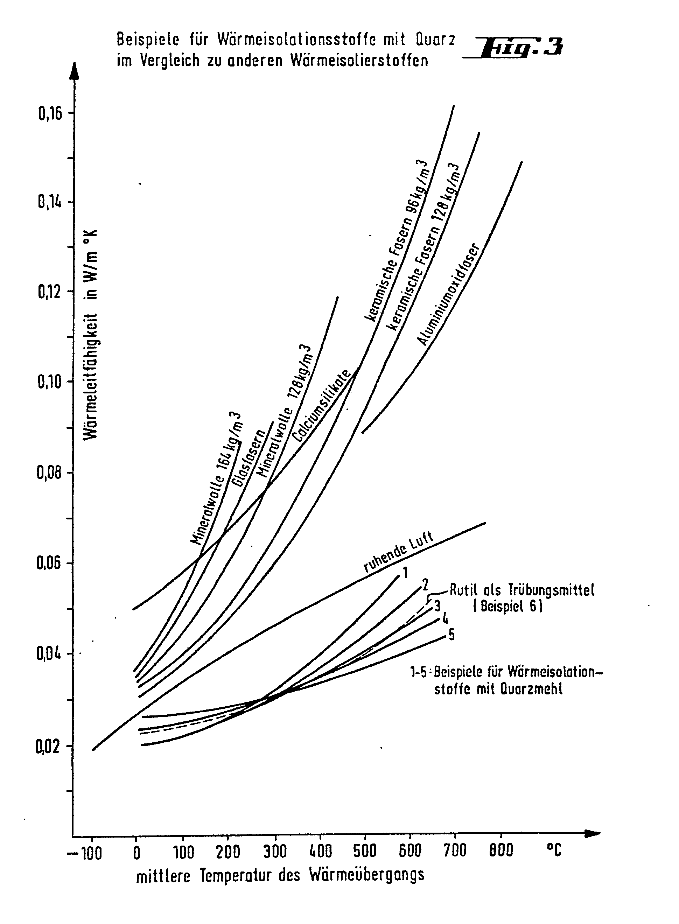

Die in den Beispielen 1 bis 5 genannten Wärmeisolationsstoffe haben bei einer Glühtemperatur von 1000°C über einen Zeitraum von 10 h einen Durchmesserschrumpf ihrer Prüfplatten von 2,5 bis 3,0%. Die Wärmeleitfähigkeiten in Abhängigkeit von den mittleren Temperaturen des Wärmeübergangs der einzelnen Wärmeisolationsstoffe mit Quarz im Vergleich zu anderen Wärmedämmstoffen sind in dem Diagramm gemäß Figur 3 graphisch dargestellt.

Aus diesem Diagramm ist ersichtlich, daß der optimale Quarzanteil bei 40 Gew.-% liegt. Man kann jedoch eine zusätzliche Verbesserung der Isolierwirkung innerhalb eines bestimmten Anwendungstemperaturbereiches erreichen, wenn man wie im Beispiel 5 beschrieben, eine bestimmte Teilchengrößenzusammensetzung des Quarzpuders wählt.

### Beispiel 6 (Vergleichsbeispiel)

Es wird eine Mischung wie in Beispiel 5 hergestellt und verpreßt. Dabei wurde statt Quarz Rutil zugesetzt. Die Wärmedämmleistung ist der Figur 3 zu entnehmen.

### Beispiel 7

Es wird eine Mischung gemäß Beispiel 1, die aus 53 Gew.-% einer gefällten Kieselsäure mit einer Oberfläche nach BET von ca. 150 bis 250 m²/g, 40 Gew.-% eines feinteiligen Quarzes (Teilchengrößenspektrum siehe die Beispiele 1 bis 4, bzw. Figur 1) und 7 Gew.-% einer anorganischen Faser auf Basis Aluminiumsilikat besteht, hergestellt. Die Mischung wird zu Platten verpreßt.

Wärmeleitfähigkeit bei einer mittleren Temperatur des Wärmeübergangs von 270°C: 0,037 W/m°K.

### Beispiel 8

Es wird eine Mischung gemäß Beispiel 1, aus 63 Gew.-% Ruß, dessen Oberfläche nach BET ca. 150 bis 250 m²/g betragen kann, 30 Gew.-% eines feinteiligen Quarzes (Teilchengrößenspektrum siehe Beispiele 1 bis 4) und 7 Gew.-% einer anorganischen Faser auf Basis Aluminiumsilikat hergestellt. Die Mischung wird zu Platten mit Litergewicht von 300 g/l verpreßt.

Wärmeleitfähigkeit bei einer mittleren Temperatur des Wärmeübergangs von 165°C: 0,028 W/m°K.

### Beispiel 9

Man stellt wie in Beispiel 1 beschrieben eine Mischung, bestehend aus 63 Gew.-% einer pyrogenen Kieselsäure, 30 Gew.-% eines feinteiligen Schiefermehls mit einem Teilchengrößenspektrum von 2 bis

100 μm und 7 Gew.-% einer anorganischen Faser auf Basis Aluminiumsilikat, her. Die Mischung wird zu Platten mit Litergewicht 300 g/l verpreßt werden.

Wärmeleitfähigkeit bei einer mittleren Temperatur des Wärmeübergangs von 269°C : 0,032 W/m°K.

Die mit den Wärmeisolationsmischungen der Beispiele 1 bis 9 ermittelten Wärmeleitfähigkeitswerte werden in der Tabelle 1 zusammenfassend dargestellt.

Dieselben Wärmeleitfähigkeitswerte sind ebenfalls in der Figur 3 graphisch dargestellt. Dabei wurden zum Vergleich die Wärmeleitfähigkeitswerte für Mineralwolle 164 kg/m³, Glasfasern, Mineralwolle 126 kg/m³, Calciumsilikate, keramische Fasern 96 kg/m³, keramische Fasern 126 kg/m³, Aluminiumoxidfasern und ruhende Luft ebenfalls graphisch dargestellt.

Tabelle 1

|  | mittlere Temperatur des Wärmeüberganges °C | absolute Wärmeleitfähigkeit in (W/m °C) |
|---|---|---|
| Beispiel 1 |  |  |
| 20 Gew.-% Quarz (Fig. 1) | 163° C | 0,024 |
| 73 Gew.-% pyrog. Kieselsäure | 268° C | 0,028 |
| 7 Gew.-% Aluminiumsilikatfaser | 374° C | 0,037 |
|  | 478° C | 0,046 |
| Beispiel 2 |  |  |
| 30 Gew.-% Quarz (Fig. 1) | 164° C | 0,024 |
| 63 Gew.-% pyrog. Kieselsäure | 268° C | 0,027 |
| 7 Gew.-% Aluminiumsilikatfaser | 374° C | 0,034 |
|  | 479° C | 0,042 |
| Beispiel 3 |  |  |
| 50 Gew.-% Quarz (Fig. 1) | 164° C | 0,025 |
| 43 Gew.-% pyrog. Kieselsäure | 268° C | 0,028 |
| 7 Gew.-% Aluminiumsilikatfaser | 371° C | 0,033 |
|  | 476° C | 0,039 |
| Beispiel 4 |  |  |
| 40 Gew.-% Quarz (Fig. 1) | 164° C | 0,024 |
| 53 Gew.-% pyrog. Kieselsäure | 266° C | 0,027 |
| 7 Gew.-% Aluminiumsilikatfaser | 373° C | 0,033 |
|  | 479° C | 0,038 |
| Beispiel 5 |  |  |
| 40 Gew.-% Quarz (Fig. 1) | 163° C | 0;027 |
| (Teilchengrößenspektrum Fig. 2) | 268° C | 0,029 |
| 53 Gew.-% pyrog. Kieselsäure | 372° C | 0,032 |
| 7 Gew.-% Aluminiumsilikatfaser | 477° C | 0,036 |
|  | 529° C | 0,039 |
| Beispiel 6 (Vergleichsbeispiel) |  |  |
| 40 Gew.-% Rutil | 166° C | 0,026 |
| 53 Gew.-% pyrog. Kieselsäure | 266° C | 0,028 |
| 7 Gew.-% Aluminiumsilikatfaser | 372° C | 0,032 |
|  | 474° C | 0,039 |

**0 068 084**

Tabelle 1 (Fortsetzung)

|  | mittlere Temperatur des Wärmeüberganges °C | absolute Wärme- leitfähigkeit in (W/m °C) |
|---|---|---|
| **Beispiel 7** | | |
| 40 Gew.-% Quarz (Fig. 1) | 164°C | 0,031 |
| 53 Gew.-% gefällte Kiesels. | 270°C | 0,037 |
| 7 Gew.-% Aluminiumsilikatfaser | 375°C | 0,041 |
| | 480°C | 0,049 |
| **Beispiel 8** | | |
| 20 Gew.-% Quarz (Fig. 1) | 63°C | 0,027 |
| 63 Gew.-% Ruß | 114°C | 0,026 |
| 7 Gew.-% Aluminiumsilikatfaser | 165°C | 0,028 |
| | 217°C | 0,026 |
| **Beispiel 9** | | |
| 30 Gew.-% Schiefermehl | 164°C | 0,026 |
| 63 Gew.-% pyrog. Kieselsäure | 269°C | 0,032 |
| 7 Gew.-% Aluminiumsilikatfaser | 372°C | 0,037 |
| | 483°C | 0,047 |

**Patentansprüche**

1. Wärmeisolationsmischung, dadurch gekennzeichnet, daß sie neben hochdispersen Füllstoffen und gegebenenfalls anorganischen Fasern oder/und anorganischen Bindern Quarzpuder mit Teilchengrößenspektren, deren Verteilungsmaxima der Teilchendurchmesser sich von 1 bis 100 Mikrometer (µm) erstrecken, in Mengen von 20 bis 50 Gew.-%, bezogen auf die gesamte Mischung, enthält.

2. Wärmeisolationsmischung nach dem Anspruch 1, dadurch gekennzeichnet, daß das Quarzpuder das Teilchengrößenspektrum gemäß Figur 2 aufweist.

3. Wärmeisolationsmischung nach Anspruch 1 oder 2 enthaltend Mineralien, deren Hauptbestandteil Quarz ist.

**Claims**

1. Thermal insulating mixture, characterised in that it contains, in addition to highyl-dispersed fillers and optionally inorganic fibres and/or inorganic binders, quartz powder with particle size spectra in which the distribution maxima of the particle diameters range from 1 to 100 micrometers (µm), in a quantity of from 20 to 50% by weight, based on the total mixture.

2. Thermal insulating mixture according to claim 1, characterised in that the quartz powder has the particle size spectrum according to Figure 2.

3. Thermal insulating mixture according to claim 1 or 2 containing minerals, the main consistuent of which is quartz.

**Revendications**

1. Mélange thermo-isolant, caractérisé en ce qu'il contient, en plus de charges fortement dispersées et éventuellement de fibres minérales et/ou de liants minéraux, du quartz en poudre avec un spectre granulométrique, dont les maxima de répartition des diamèters des particules s'étendent de 1 à 100 microns, dans des proportions de 20 à 50% en poids, calculé sur le mélange total.

2. Mélange thermo-isolant suivant la revendication 1, caractérisé en ce que le quartz en poudre présente le spectre granulométrique illustré dans la figure 2.

3. Mélange thermo-isolant suivant les revendications 1 ou 2, caractérisé en ce qu'il contient des matières minérales, la matière constituant principale étant le quartz.

Fig. 1 Körnungskennlinie von Quarz

0 068 084

**Fig. 2**  Körnungskennlinie von Quarz

Beispiele für Wärmeisolationsstoffe mit Quarz im Vergleich zu anderen Wärmeisolierstoffen **Fig. 3**